# EUROPEAN PATENT APPLICATION

(11) **EP 0 947 251 A2**
(43) Date of publication of application: **06.10.1999**
(21) Application number: 99106428.8
(22) Date of filing: 29.03.1999
(51) Int. Cl.: B02C 19/18, B02C 13/02

(54) **System for grinding materials at atmospheric pressure**

(30) Priority: 30.03.1998 US 50123
(71) Applicant: PRAXAIR TECHNOLOGY, INC., Danbury, CT 06810-5113 (US)
(72) Inventor: Jackson, Johnny Dean, Sandy Hook, CT 06482 (US); Kohler, Rudolph Hugo, Danbury, CT 06482 (US)
(74) Representative: Schwan, Gerhard, Dipl.-Ing.

(57) **Abstract**

This invention is directed to a high energy impact system adapted for use at atmospheric pressure for reducing the particle size of materials to an average diameter of less than about 600 microns, the system comprising the combination of pulverizing hammers which operates at an impact velocity of between about 400 fps to about 700 fps, means for providing a high specific input power through the pulverizing hammers of between about 25 hp/ft² to about 100 hp/ft² swept by the hammers.

## Description

### FIELD OF THE INVENTION

This invention relates to a system and process for reducing the particle size of a material at atmospheric pressure, and more particularly, to a system and process for cryogenically grinding an elastomeric material.

### BACKGROUND OF THE INVENTION

Landfill shortages have made it increasingly more desirable to recycle materials heretofore disposed in landfills. For example, rubber tires and many plastic items are now being recycled for many new uses. One such use involves milling the recycled rubber and mixing the resulting ground product with materials for paving roads.

In conventional milling operations for impacting brittle materials, including cryogenic milling operations, a rotor is used to provide the velocity to the hammers for impact energy necessary to fracture the materials below their glass transition temperature along microcracks or dislocations therein. For instance, rubber tire particles may be milled in a typical cryogenic hammermill to a ground rubber product, most of which is smaller than 30 mesh (about 595 micron) and some of which is a smaller than 80 mesh (177 micron). In order to achieve still smaller particle sizes, it is ordinarily necessary to increase the speed of the rotor within the mill so as to increase the impact energy imparted to the rubber particles. However, prior attempts to further reduce the particle size of material smaller than 30 mesh (about 595 micron) have resulted in lower throughput (i.e., pounds of material per hour through the mill) and in significantly higher consumption of the coolant which is used to lower the temperature of the tire rubber particles to cryogenic levels.

U.S. Patent No. 5,597,123 discloses an ultra-high energy cryogenic impact system and processes for reducing the particle size of materials to an average diameter as small as about 40 micron. The systems include a cooling station for cooling the materials to a temperature within the range of from about -40°F. to about -450°F., a milling station for reducing the particle size of the cooled materials, which station includes a rotor operating at a tip speed within the range of from about 600 to about 1500 feet per second, and an atmosphere modifier for modifying the gaseous atmosphere within the milling station.

Although the ultra-high energy cryogenic impact system of U.S. Patent No. 5,597,123 provides a good performing system, there is a need in the industry for a simpler cryogenic impact system which complements the ultra-high energy cryogenic impact system such that the new system requires a comparatively lower capital cost, provides greater operating flexibility, affords better fiber and metal handling, and performs at a good production rate.

### OBJECTS OF THE INVENTION

It is an object of the invention to provide a high energy impact system adapted for reducing the particle size of materials.

Another object of this invention is to provide a system that complements the ultra-high energy cryogenic impact system to provide a wider range of particle grinding capabilities.

### SUMMARY OF THE INVENTION

This invention is directed to a high energy impact system adapted for use at atmospheric pressure for reducing the particle size of materials to an average diameter of less than about 600 microns, the system comprising the combination of pulverizing hammers which operates at an impact velocity of between about 400 fps to about 700 fps, and means for providing a high specific input power through the pulverizing hammers at between about 25 to about 100 hp/ft² of the area swept by the hammers.

### BRIEF DESCRIPTION OF THE DRAWINGS

Other objects, features and advantages will occur to those skilled in the art from the following description of preferred embodiments and the accompanying drawings, in which:
Fig. 1 is a schematic representation of the process as used in this invention; and
Fig. 2 is a schematic representation of a liner screen with the single mill retaining screen opening.

### DETAILED DESCRIPTION OF THE INVENTION

When grinding a friable material by an impact process, increasing the speed of the hammers imparts more energy into the material, thereby causing the material to fracture into smaller particles. One aspect of the present invention is the increase in hammer tip speeds by maintaining rotor speed while increasing the rotor diameter. Typically, less than 5% of the power input to the hammer of an impact system is used to fracture particles. The remainder of the power is consumed by parasitic losses such as drag due to wind resistance (windage), particle deformation, mechanical friction, particle acceleration, etc. Windage is the major power used at high speed. This results in greater power loss from drag than by increasing the rotational speed in a mill with the same or smaller diameter since the drag is proportional to the rotational speed to the third power and diameter of the rotor to the fifth power.

Grinding of elastomeric materials is feasible in a close clearance impact type of mill if the material can be transformed into a friable material by freezing it and maintaining it in a brittle state below its glass transition temperature. Typically, cryogenic milling with impact mills can be carried out on many elastomeric materials by utilizing liquid nitrogen and/or carbon dioxide to make them friable and as supplemental refrigerant sources in the mill to maintain them below their glass transition temperature during the grinding process.

Finer size products can be produced by increasing the hammer peripheral speed, which increases the energy imparted to the particles by the square of the velocity.

Standard mill retaining screens in small sizes, i.e., 0.32 cm and smaller round hole screens, exhibit high wear rates in this service and will cause some of the particles that would normally have exited the mill to rebound into the grinding chamber and thereafter continued to be recycled, thus reducing the mill's capacity and causing unstable operation. Another disadvantage of a small opening standard screen is that if the material contains fiber which does not embrittle, the fiber will tend to cover the holes with the same results. Using a retaining screen of the same design as the liner with a rectangular opening across the width of the screen near its terminus provides finer product at lower specific liquid nitrogen consumption than standard screens.

To obtain optimum specific liquid nitrogen consumption, certain changes to the equipment and operation of the hammers in the impact system is required, so that the power input into the mill should be such that the maximum amount of elastomeric material per unit of time can be processed while still producing an acceptable result.

Additional hammers will improve the ability of the mill to produce finer mesh products and may reduce drag due to aerodynamic characteristics of closer spacing between the hammers.

It is therefore an aspect of the present invention to provide a system that increases the impact energy levels with sufficient power input to lead the mill to its maximum grinding capacity. Any modifications that lower hammer drag and/or improve distribution of the material in the grinding chamber that does not adversely affect the ability of the machine to grind the material would be improvements since the liquid nitrogen required for refrigeration is directly proportional to the work expended in the grinding chamber. Lower drag causes the optimum specific refrigerant consumption to occur at a higher energy level for a given mesh size.

Also contemplated in the present invention is the reduction in the side clearance between the hammers and the grinding chamber walls. By reducing the space between the hammers and the side of the grinding chamber, lower amounts of materials will escape hammer impact, thus enabling a more efficient grinding process.

The present system is flexible. Operationally, the system can be easily modified to pulverize materials in a wide range of sizes. For example, scrap tire chips containing some wire and fiber having a size of about 1.9 cm to about 400 micron or smaller feedstocks are usable in this invention. Preferably, the system is adapted to pulverizing materials to an average diameter of less than about 600 microns at atmospheric pressure. More preferably, the size of the pulverized material has an average diameter of less than about 177 microns. Moreover, the system may be easily modified to produce a variety of exit sizes with corresponding changes to the speed of the hammer impact, the temperature of the system, and the internal screen geometry.

Another parameter that can be adjusted is the type of window screen which enables the system to receive a wide range of tire feedstock (i.e., full wire and fiber loads) with a preferably, heavy duty, wear and puncture resistant, non clogging, self-relieving configuration. Comparatively, the conventional systems use internal mill screens with significantly smaller screen openings made from thin gauge steel, which are less effective in pulverizing materials that may contain steel or fiber, as such smaller opening results in puncture or clogs. Where the conventional system employs larger screen openings, the system does not result in a size reduction capability of the present system.

The present system has the capability to pulverize a significantly greater amount of materials than that of the conventional system. The present system is expected to provide a maximum production rate of pulverizing materials of up to about 6000 lb/hr at full power. Preferably, this system has a production rate of between about 4000 to 5000 lb/hr.

The present system produces, on the average, a significantly greater amount of pulverized products at a particular size. For example, the present system produces up to 60% pulverized products of about 177 micron from a 4.7 mm feed at an impact velocity of between about 400 to 700 feet per second (fps) tip speed. Preferably, the impact velocity is between about 500 fps to about 600 fps. Comparatively, the conventional mill under similar conditions produces only a small amount of pulverized products of 177 micron from a 4.7 mm feed.

This system also enables a means for providing a high specific input power through the pulverizing hammers. For purposes of this invention, the high specific input power is from about 25 hp/ft² to about 100 hp/ft² swept by the hammers. Preferably, the high specific input power is about 40 hp/ft².

This system enables the production of larger quantities of materials through a single mill. This advantage is attributed to the increased available power operating in conjunction with the higher tip speeds. With 4.7 micron feed, the throughput rate to generate from about 50% to 60% product of about 177 micron is from about 4000 to 6000 lb/hr.

Another significant advantage of this system is the requirement for lower amounts of cryogens. The operation of the present system enables the use of about 2 to about 2.5 pounds of liquid nitrogen per pound of elastomeric materials of about 177 micron. Comparatively, a conventional mill may require from about 3 to about 15 pounds of liquid nitrogen per pound of elastomeric materials of about 177 micron.

The use of a mill screen with a liner modified with a gap in the discharge end may be used to increase the average number of impacts the particles encounter before exiting the mill. For a particle that exits the mill through the first available hole in the standard screen, the number of hits will be approximately double, resulting in smaller size product.

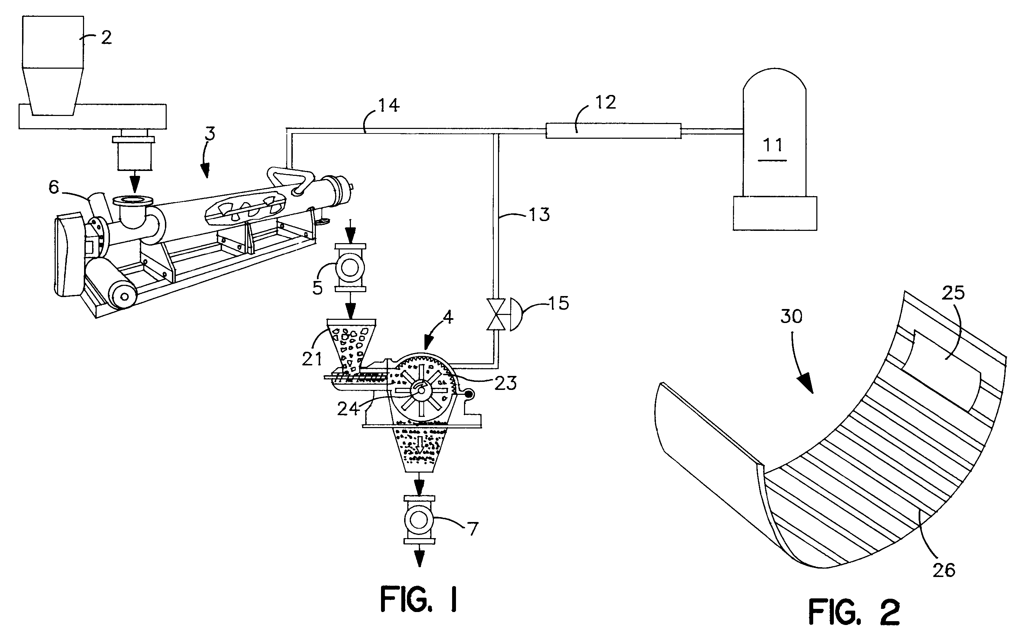

The invention will be illustrated by the description in view of the drawings. With reference to Fig. 1, materials to be milled are placed in a hopper 2. Suitable materials to be milled include, but are not limited to, metals (e.g., titanium, zinc and the like), plastics (e.g., thermoplastics such as polyacrylates, polycarbonates, polyethylenes, polypropylenes and the like, or thermosets such as epoxies), elastomers (e.g., rubbers) chemicals (e.g., sodium bicarbonate, pigments and the like), food items (e.g., nuts, dried fruits, citrus peels, cheeses, sugars and the like) and food-related items (e.g., spices), miscellaneous items (e.g., animal cartilage and animal organs) and the like. Particular examples include rubber, thermoplastics, thermosets and spices. Two preferred examples of materials to be milled are smaller than 4 U.S. mesh tire rubber particles and 1/8 inches polyethylene or polypropylene pellets.

A separate, independent feeder, such as a precision type feeder which is capable of providing a substantially constant mass flow (e.g., ±2%) of feed material, may be used as the hopper 2. The hopper 2 temporarily houses the materials to be milled and controls the feed rate of the materials to the cooling station 3 and ultimately to the milling station 4 of the system. The feed rate is the amount of materials measured by weight per unit of time introduced to the cooling station 3. The feed rate remains substantially constant throughout the system, and is controlled so as to permit an appropriate amount of materials to pass into the cooling station 3 for sufficient cooling and thereafter to pass into the milling station 4 for efficient size reduction thereof. In practice, the feed rate may be established by observing the horsepower drawn by the milling station 4.

From the hopper 2, the materials may be fed by conventional feeding techniques (such as a screw conveyor feeder) to a cooling station 3, where the materials are cooled. In the cooling station 3, the temperature of the materials to be milled is reduced, thereby increasing brittleness and susceptibility to fracture. The temperature to which the materials are cooled in the cooling station 3 should be below the embrittlement or glass transition temperature of the material. For instance, with certain brittle materials (e.g., many thermosets such as epoxies) it may be sufficient to reduce the temperature thereof by air cooling, such as with air chillers, to a temperature slightly below ambient. With other materials (e.g., rubbers or thermoplastics), it may be more desirable to reduce the temperature of the materials to be milled to cryogenic levels.

In a preferred mode, the cooling station 3 is a cryogenic cooling station, in which materials to be milled are cooled to a cryogenic temperature within the range of about -80°F to about -320°F. Ordinarily, a liquefied gas, such as liquid nitrogen, liquid helium, liquid oxygen, liquid argon or liquid carbon dioxide, will reduce the temperature to within that range. Solid carbon dioxide (also called dry ice) may also be employed. A preferred liquefied gas is liquid nitrogen, where the temperature reached may be as low as -320°F.

In the precooler 3, the materials to be milled may be cooled directly through a counter-current heat exchanger or concurrent heat exchange with the coolant or refrigerant, such as liquid nitrogen, as is done in conventional cryogenic milling operations.

The precooler 3 includes a vent 6, from which used refrigerant (e.g., air or vaporized gas, such as vaporized nitrogen gas, vaporized helium gas or vaporized argon gas) is vented. From a safety aspect, the vented gas should be collected and removed from the operating area.

The cooled materials are then fed, such as by gravity, to the milling station 4 through a gas tight rotary feedlock 5 or other suitable gas sealing device to prevent the introduction therein of ambient air. Since the materials to be milled pass through the milling station 4 in a finite residence time, it is advantageous for the precooler 3 to efficiently cool the materials prior to entering the milling station 4. And, as noted above, such precooling may be accomplished through feeding of refrigerant into the precooler 3 through refrigerant line 14. Alternatively, refrigerant may be added directly into the milling station 4 through refrigerant line 13, regulated through valve 15. The refrigerant added to the milling station 4 from refrigerant line 13 is usually used as a supplemental refrigerant, though in certain cases, it may be preferable to add the main source of refrigerant through refrigerant line 14. One example of how refrigerant may be supplied is through liquid nitrogen storage tank 11, which passes through an insulated liquid nitrogen line 12, which in turn feeds into refrigerant lines 13 and 14.

Within the milling station 4 is a rotor 24. The rotor may be cast, machined, welded and milled or fabricated from a variety of materials including, but not limited to, stainless steel, nickel steel, titanium (particularly where a high strength to mass ratio is desirable), and other alloys known to be suitable for cryogenic service. Preferably, the rotor has an aerodynamic geometry to minimize windage. The rotor hub, which supports the hammers or impact surface, has a disk- or flywheel-like shape, and is streamlined to minimize windage.

In operation, the rotor 24 contacts the material through hammer 23 with a sufficient force to provide an impact energy sufficient to fracture the material. For instance, the mill rotor operates with a tip speed within the range of from about 400 fps to about 700 fps with a tip speed approaching from about 500 fps to about 600 fps being preferred.

Hammer 23 shatters or fractures the material in milling station 4. The shattered or fractured material then passes through a retaining screen or slotted discharge plate within the milling station 4 before exiting that station. The screen may have a conventional design or may be custom-designed depending on the application. The retaining screen or discharge plate also act to enhance the residence time of the material within the milling station 4, thereby creating a greater opportunity for the material to contact the rotor 24 and be reduced to the desired particle size. The ground material then passes through a mill retaining screen opening 25, and optionally through another gas tight rotary airlock 7 to a collection chamber (not shown) at atmospheric pressure.

In a preferred mode, tire rubber particles (having a particle size of smaller than about 4 U.S. mesh or 4.7 mm) are cooled in the cooling station to a temperature below about -0°F. and desirably below -80°F. The temperature in which the particle enters the system is about -320°F. using liquid nitrogen as the coolant. The cooled tire rubber particles are transported to the milling station. Within the milling station, the rotor operates at a tip speed as high as 700 fps, contact with which causes the cooled tire rubber particles to be reduced to a particle size having an average diameter preferably within the range of about 125 micron to about 250 micron, most preferably about 177 micron.

Fig. 2 provides a drawing of the retaining liner screen 30 with the single opening. The retaining liner screen 30 is located within the milling station. Ridge 26 on the inside surface of liner screen 25 facilitates grinding of the material with the hammer 23, which shatters or fractures the material in milling station 4. The shattered or fractured material passes through a retaining liner 30 screen or slotted discharge plate within the milling station 4 before exiting that station. One example of the where the milled material may exit the milling station 4 is through a mill retaining screen opening 25.

### EXAMPLE

Feed material of a size of from about 4 mesh (4.7 mm) to about 6 mesh (3.4 mm) scrap tire with most fiber and metal removed were used. A comparison is made using a system from a conventional mill and the system of the present invention. Both systems are optimized to produce maximum product quantity of about minus 80 mesh (177 micron) while minimizing the less valuable oversized material. Both the conventional mill (such as a Pulva model D type mill) and the mill of the present invention having virtually the same rough internal dimensions and geometry, and are fabricated from the same casting. The system of the present invention uses modified hammers, different alloys, modified screens and breaker plates, greater power, higher tip velocities and other modifications to improve the aerodynamics and overall performance.

| | Conventional System | Present System |
|---|---|---|
| Operating Conditions | | |
| Tip Velocity (fps) | 366 | 525 |
| Power (hp) | 100 | 300 |
| Exit Temp (F) | -90 | -90 |
| Feed (mesh) | 4 to 6 | 4 to 6 |
| Screen (cm) | 0.50 (round holes) | 5 (slot) |

| Results | | |
|---|---|---|
| Feed Rate (lb/hr) | 4000 | 4000 |
| LN₂ (lb. LN₂/lb. feed) | 1.0 | 1.5 |
| % Past 80 mesh | 23 | 60 |

It should be noted that the conventional mill operating with small round hole screens are very susceptible to clogging with fiber. Virtually all scrap tire rubber made from whole tires contains some fiber at a feed size of about 4 mesh (4.7 mm) to about 6 mesh (3.4 mm). Increasing the hole size will make a conventional mill more tolerant of fiber but will reduce the percentage of fines. The data shown for the conventional mill assumes an almost fiber free condition which is difficult and costly to achieve. Further, increasing the power and feed rate to a conventional mill results in lowered grinding efficiency, increased fiber problems and eventually clogging.

Specific features of the invention are shown in one or more of the drawings for convenience only, as each feature may be combined with other features in accordance with the invention. Alternative embodiments will be recognized by those skilled in the art and are intended to be included within the scope of the claims.

## Claims

1. A high energy impact system adapted for use at atmospheric pressure for reducing the particle size of a material to a pulverized material having an average diameter of less than about 600 micron, the system comprising the combination of:
(a) pulverizing hammers which operate at an impact velocity of between about 400 fps to about 700 fps; and
(b) means for providing a high specific input power through the pulverizing hammers at between about 25 hp/ft² to about 100 hp/ft² of the area swept by the hammers.

2. The system of claim 1 wherein said material is an elastomeric particle.

3. The system of claim 2 wherein said system is further adapted for use at low temperature conditions.

4. The system of claim 1 wherein said low temperature is less than about -80°F.

5. The system of claim 1 further comprising a single mill retaining screen opening of between about 2.5 cm to about 15 cm for passing said pulverized material.

6. The system of claim 1 wherein said impact velocity is between 500 fps to 600 fps.

7. The system of claim 1 wherein said specific input power is about 40 hp/ft².

8. The system of claim 1 wherein said retaining screen opening is about 5 cm.

9. The system of claim 1 wherein said pulverized material has an average diameter of less than about 177 microns.

10. A high energy impact system adapted for use at atmospheric pressure and low temperature of less than -80°F for reducing the particle size of an elastomeric particle to a pulverized material having an average diameter of less than about 177 micron, the system comprising the combination of:
(a) pulverizing hammers which operates at an impact velocity of between about 400 fps to about 700 fps;
(b) means for providing a high specific input power through the pulverizing hammers at between about 25 hp/ft² to about 100 hp/ft² of the area swept by the hammers; and
(c) a single mill retaining screen opening of between about 2.5 cm to about 15 cm for passing said pulverized material.
